# EUROPEAN PATENT APPLICATION

(11) **EP 4 293 140 A1**
(43) Date of publication of application: **20.12.2023**
(21) Application number: 22752531.8
(22) Date of filing: 18.01.2022
(51) Int. Cl.: C25B 9/00, C01B 3/02, C01B 13/02, C25B 1/04, C25B 9/23

(54) **GAS GENERATOR**

(30) Priority: 09.02.2021 JP 2021019354
(71) Applicant: Panasonic Intellectual Property Management Co., Ltd., Osaka 571-0057 (JP)
(72) Inventor: ISHIGAMI Yohei, Kadoma-shi, Osaka (JP); IMAI Makoto, Kadoma-shi, Osaka (JP); MIYATA Takahiro, Kadoma-shi, Osaka (JP); TANAKA Yoshinori, Kadoma-shi, Osaka (JP)
(74) Representative: Grünecker Patent- und Rechtsanwälte PartG mbB
(86) International application number: PCT/JP2022/001515
(87) International publication number: WO 2022/172699

(57) **Abstract**

Gas generator (1) includes decomposition unit (2) and supply unit (3). Decomposition unit (2) reacts with at least a portion of a supply liquid to generate at least one of hydrogen gas or oxygen gas. Supply unit (3) collects moisture in the atmosphere, and supplies the collected moisture to decomposition unit (2) as supply liquid.

## Description

### TECHNICAL FIELD

The present disclosure relates generally to a gas generator. More specifically, the present disclosure relates to a gas generator that generates at least one of hydrogen gas and oxygen gas.

### BACKGROUND ART

Patent Literature 1 discloses a hydrogen generator for beverages. The hydrogen generator includes an ampule member enclosing therein an aqueous solution containing water as a main composition, and an outer cover member enclosing a metal material that reacts with water to generate hydrogen and the ampule member. By placing the hydrogen generator in a desired beverage, the hydrogen gas flowing out of the outer cover member is dissolved in the beverage, and a user can obtain a beverage (hydrogen water) in which hydrogen is dissolved. Patent Literature 1 discloses that aging is prevented and beauty and health are promoted by taking hydrogen water during exercise in which active oxygen is easily generated in body, when drinking something, when smoking, when staying in an environment with much ultraviolet or in a contaminated environment, when under-sleeping, or when subjected to high-stress such as after working long hours.

### Citation List

### Patent Literature

PTL 1: WO 2018/047958 A

### SUMMARY OF THE INVENTION

The hydrogen generator (gas generator) described in Patent Literature 1 may require a work of periodically supplying water or liquid (supply liquid) or a work of periodically replacing an ampule member. For this reason, it is essential that the hydrogen generator is set and used in an environment that allows such a periodic work to be performed easily. Thus, there is room for making the hydrogen generator more convenient.

The present disclosure has been made in view of the above issue. An object of the present disclosure is to provide a gas generator that is more convenient.

A gas generator according to one aspect of the present disclosure includes a decomposition unit and a supply unit. The decomposition unit reacts with at least a portion of a supply liquid to generate at least one of hydrogen gas or oxygen gas. The supply unit collects moisture in the atmosphere, and supplies the collected moisture to the decomposition unit as the supply liquid.

The gas generator according to one aspect of the present disclosure is more convenient.

### BRIEF DESCRIPTION OF THE DRAWINGS

Fig. 1 is an external perspective view of a main part of a gas generator according to one exemplary embodiment.
Fig. 2A is a plan view of a main part of the gas generator.
Fig. 2B is an enlarged front view of a main part of the gas generator.
Fig. 3 is an exploded perspective view of a main part of the gas generator.
Fig. 4 is a cross-sectional view of a main part taken along line A-A in Fig. 2A.
Fig. 5 is a schematic block diagram of a gas supply system including the gas generator.
Fig. 6 is a schematic conceptual diagram of the gas generator, and is a partial cross-sectional view.
Fig. 7 is a schematic conceptual diagram of a first exemplary modification of the gas generator, and is a partial cross-sectional view.
Fig. 8A is a schematic circuit diagram of a second exemplary modification of the gas generator.
Fig. 8B is a schematic circuit diagram of the second exemplary modification of the gas generator.
Fig. 9 is a schematic conceptual diagram of a third exemplary modification of the gas generator.

### DESCRIPTION OF EMBODIMENT

### (Exemplary embodiment)

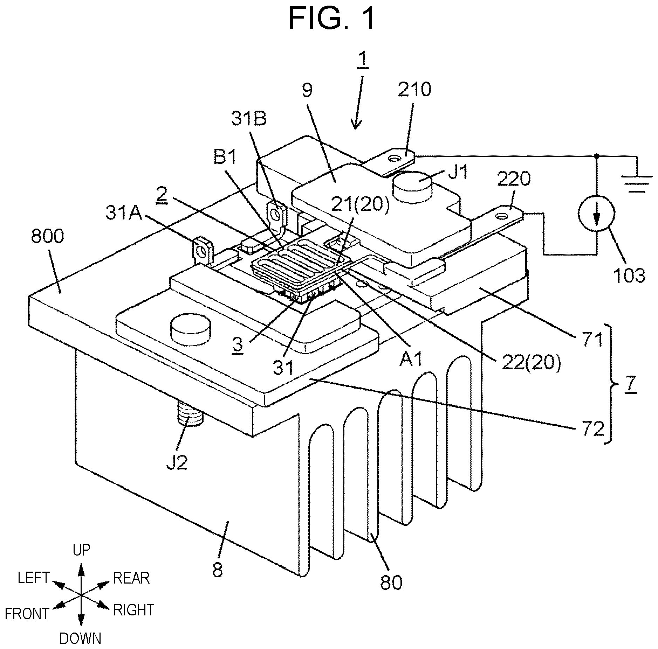

Gas generator 1 and an exemplary modification according to the present exemplary embodiment will be described with reference to Figs. 1 to 9.

An exemplary embodiment and an exemplary modification to be described below are merely examples of the present disclosure, and the present disclosure is not limited to the exemplary embodiment and the exemplary modification described below. Besides the exemplary embodiment and the exemplary modification, various modifications can be made depending on design, for example, without departing from the technical idea of the present disclosure.

Furthermore, all drawings to be described for the exemplary embodiment are schematic diagrams, and ratios of sizes and thicknesses of components in the drawings do not necessarily reflect actual dimensional ratios.

### (1) Outline

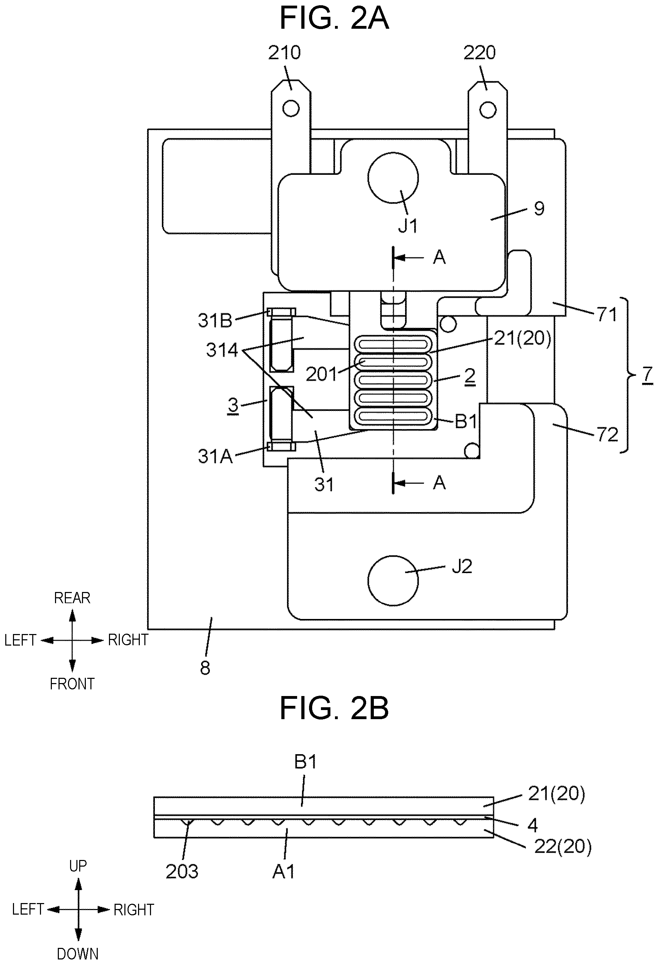

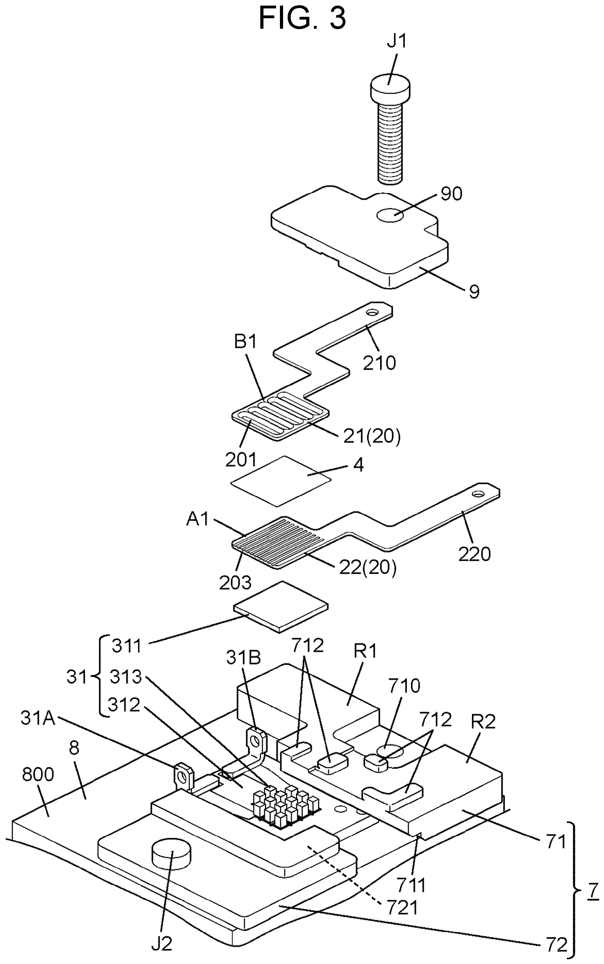

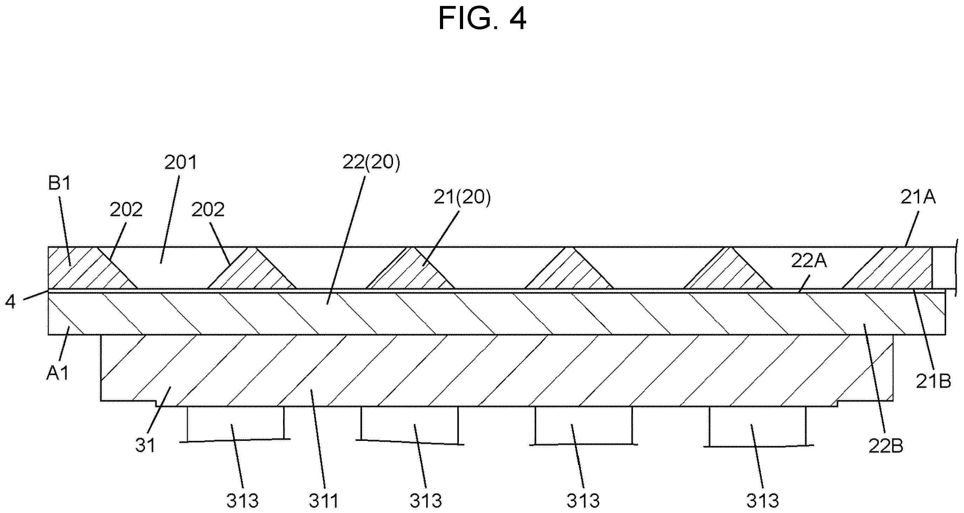

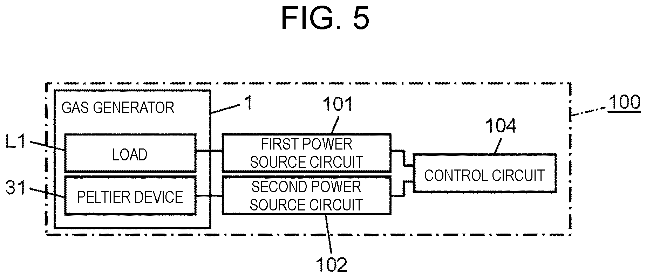

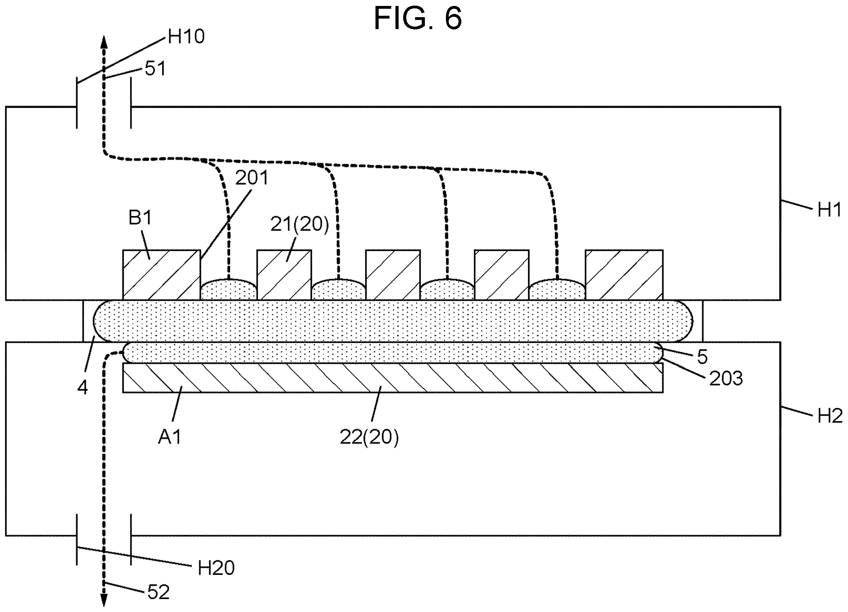

An outline of gas generator 1 according to the present exemplary embodiment will be described. Fig. 1 is an external perspective view of a main part of gas generator 1 according to the present exemplary embodiment. Fig. 2A is a plan view of a main part of gas generator 1. Fig. 2B is an enlarged front view of a main part of gas generator 1. Fig. 3 is an exploded perspective view of a main part of gas generator 1. Fig. 4 is a cross-sectional view of a main part taken along line A-A in Fig. 2A. Fig. 5 is a schematic block diagram of gas supply system 100 including gas generator 1. Fig. 6 is a schematic conceptual diagram of gas generator 1, and is a partial cross-sectional view.

Gas generator 1 according to the present exemplary embodiment is an apparatus that generates gas by electrolysis. As illustrated in Fig. 1, gas generator 1 includes decomposition unit 2 and supply unit 3. Decomposition unit 2 reacts with at least a portion of a supply liquid to generate at least one of hydrogen gas 51 and oxygen gas 52 (see Fig. 6).

As an example, decomposition unit 2 includes a pair of electrodes 20 that are anode A1 and cathode B1, and electrolyzes at least a portion of supply liquid 5 (see Fig. 6) to generate hydrogen gas 51 and oxygen gas 52. In gas generator 1 according to the present exemplary embodiment, the method of gas generation is not limited to "electrolysis". For example, decomposition unit 2 may be configured to generate at least one of hydrogen gas 51 and oxygen gas 52 using a chemical reaction between a supply liquid and a metal, and in such a case, the pair of electrodes 20 may be omitted.

Supply unit 3 collects moisture in the atmosphere, and supplies the collected moisture to decomposition unit 2 as supply liquid 5. That is, supply liquid 5 contains collected moisture. Supply liquid 5 may simply be the collected moisture (pure water), but desirably be a liquid containing moisture and impurities, since conduction (conductivity) is lower for a less amount of impurities.

As an example, as illustrated in Figs. 1 to 4, supply unit 3 includes Peltier device 31, and condenses and collects moisture in the atmosphere by cooling with Peltier device 31. Gas generator 1 of the present exemplary embodiment has an arrangement structure in which at least one of electrodes 20 (lower electrode in Fig. 1) is directly cooled with Peltier device 31, whereby dew condensation water is supplied around electrode 20 to be readily subjected to electrolysis.

Depending on usage, one of hydrogen gas 51 and oxygen gas 52 generated by gas generator 1 may be used and the other may be discarded or both gases may be used. As described in Patent Literature 1 described above, hydrogen (gas) has an antioxidant effect, and when taken into a human body, hydrogen bonds with active oxygen in the body to form water, and is discharged as sweat or urine. Thus, hydrogen has useful effect of preventing aging and promoting beauty and health. Besides, oxygen (gas) has useful effect on, for example, bio-related matters, culturing, fermentation, growth promotion of fish, and the like.

In gas generator 1 according to the present exemplary embodiment, as described above, moisture in the atmosphere is collected to be supplied to decomposition unit 2 as supply liquid 5. This makes it easier, for example, to omit a work of periodically adding (supplying) water or replacing a water-containing container, In this way, restriction on a use environment and an installation environment of gas generator 1 is reduced. As a result, gas generator 1 becomes more convenient.

### (2) Details

Next, an overall system (gas supply system 100) including gas generator 1 according to the present exemplary embodiment and a peripheral configuration thereof will be described in detail with reference to Figs. 1 to 6. At least a part of the peripheral configuration may be included in the configuration of gas generator 1.

### (2.1) Overall configuration

As illustrated in Fig. 5, gas supply system 100 according to the present exemplary embodiment includes gas generator 1, first power source circuit 101, second power source circuit 102, and control circuit 104. Gas supply system 100 may be used with gas generator 1 and the peripheral configuration thereof being housed in a single housing, or may be used with gas generator 1 and the peripheral configuration thereof being housed in different housings.

As illustrated in Fig. 1, gas generator 1 includes decomposition unit 2 constituting load L1 (see Fig. 5), supply unit 3, ion exchange membrane 4 (see Fig. 3), retainer 7, sink 8, and fixing part 9. In addition, as illustrated in Fig. 6, gas generator 1 further includes first electrode chamber H1 that houses one of the pair of electrodes 20 and second electrode chamber H2 that houses the other one of the pair of electrodes. Fig. 6 schematically illustrates gas generator 1. For convenience of description, illustration of first electrode chamber H1 and second electrode chamber H2 is omitted in Figs. 1 to 4. In the present disclosure, sink 8 is provided to dissipate heat, but the configuration with sink may be omitted in gas generator 1 as appropriate as long as heat is sufficiently dissipated.

Decomposition unit 2 includes the pair of electrodes 20 which are anode A1 and cathode B1. At least one of the pair of electrodes 20 preferably has a plate shape with a thickness, and in the present exemplary embodiment, both electrodes have a plate shape. Specifically, as illustrated in Fig. 3, the pair of electrodes 20 has rectangular plate shapes of substantially the same dimensions, and is disposed to face each other in such positions that their thickness directions are aligned.

Hereinafter, for gas generator 1 as illustrated in Fig. 1, the direction in which the pair of electrodes 20 is arranged is defined as up-down direction. As illustrated in Fig. 2A, the direction in which first terminal piece 210 and second terminal piece 220 (described later) are arranged is defined as left-right direction. As illustrated in Fig. 2A, the direction in which first Peltier terminal piece 31A and second Peltier terminal piece 31B (described later) are arranged is defined as front-rear direction. These definitions are not intended to limit the direction of gas generator 1 in use. Arrows representing front, rear, left, right, up, and down in Figs. 1, 2A, and 2B are merely illustrated for description, and are imaginary.

Hereinafter, for convenience of explanation, among the pair of electrodes 20 illustrated in Fig. 1, the upper electrode may be referred to as first electrode 21, and the lower electrode may be referred to as second electrode 22. In the present exemplary embodiment, first electrode 21 is cathode B1, and second electrode 22 is anode A1. Ion exchange membrane 4 is disposed between first electrode 21 and second electrode 22. Supply liquid 5 is held mainly by ion exchange membrane 4 between first electrode 21 and second electrode 22, as will be described in detail later.

First electrode 21 has first surface 21A (upper surface) and second surface 21B (lower surface) opposite to first surface 21A (see Fig. 4). Second electrode 22 has first surface 22A (upper surface) and second surface 22B (lower surface) opposite to first surface 22A (see Fig. 4).

At least one of the pair of electrodes 20 has one or a plurality of openings 201 penetrating electrode 20 in the thickness direction thereof. For example, first electrode 21 has five openings 201 penetrating first electrode 21 in the thickness direction thereof, as illustrated in Figs. 1 to 4.

As illustrated in Fig. 2A, each opening 201 opens in an elongated shape along one direction (left-right direction) in a top view. Five openings 201 are arranged along a direction (front-rear direction) orthogonal to the one direction. As illustrated in Fig. 4, substantially the entire inner circumference of each opening 201 is inclined to form a tapered shape. Specifically, inner surfaces 202 that face each other of each opening 201 are inclined such that the distance between inner surfaces 202 becomes smaller along a direction from first surface 21A toward second surface 21B.

Since openings 201 are provided, dew condensation water is readily accumulated in openings 201 and ion exchange membrane 4. In addition, gas generated around electrode 20 by electrolysis (in this case, hydrogen gas, since first electrode 21 is cathode B1) is efficiently discharged to the upper side of first surface 21A through openings 201, and as a result, hydrogen gas 51 and oxygen gas 52 are readily separated. In particular, in this structure with each opening 201 having a tapered inner circumference, dew condensation water is readily and efficiently accumulated through openings 201.

Meanwhile, as illustrated in Figs. 2B and 3, second electrode 22 has, instead of opening 201, one or a plurality of (ten in Fig. 3) grooves 203.

10 grooves 203 are formed in first surface 22A (upper surface) of second electrode 22 to be recessed in the direction toward second surface 22B. Each groove 203 extends in an elongated shape along one direction (front-rear direction) in a top view. 10 grooves 203 are arranged along a direction (left-right direction) orthogonal to the one direction. Each groove 203 is formed to extend to the front end surface of second electrode 22, and in a view looking the front end surface of second electrode 22, grooves 203 are exposed in such a manner that first electrode 21 and second electrode 22 sandwich ion exchange membrane 4 (see Fig. 2B).

Since grooves 203 is provided, dew condensation water are allowed to readily accumulate in grooves 203 and ion exchange membrane 4. Gas generated around electrode 20 by electrolysis (in this case, oxygen gas, since second electrode 22 is anode A1) runs along grooves 203 to be discharged from the front side. As a result, hydrogen gas 51 and oxygen gas 52 can be readily separated. Note that, it is not essential that the plurality of grooves 203 extend in an elongated shape in the one direction (front-rear direction) and are arranged in the direction (left-right direction) orthogonal to the one direction, as long as the generated gas is sufficiently discharged and the water is held between electrodes 20 with a certain distance kept between portions of the water.

As illustrated in Fig. 3, decomposition unit 2 also includes first terminal piece 210 formed continuously and integrally with first electrode 21 and second terminal piece 220 formed continuously and integrally with second electrode 22. First terminal piece 210 and second terminal piece 220 each have a plate shape that has a shape of a crank in a top view and are disposed not to overlap with each other. Distal ends of first terminal piece 210 and second terminal piece 220 are electrically connected to current source 103 of first power source circuit 101.

When a current from current source 103 is applied, decomposition unit 2 electrolyzes at least a portion of supply liquid 5 existing between the pair of electrodes 20 to generate hydrogen gas 51 and oxygen gas 52. In the example in Fig. 1, the current from current source 103 flows sequentially from second terminal piece 220, second electrode 22, supply liquid 5, first electrode 21, and first terminal piece 210 in this order.

Supply unit 3 collects moisture in the atmosphere, and supplies the collected dew condensation water to decomposition unit 2 as supply liquid 5. Supply unit 3 includes Peltier device 31. Supply unit 3 condenses and collects moisture in the atmosphere by cooling with Peltier device 31. Supply liquid 5 is held mainly in ion exchange membrane 4, and portions of supply liquid 5 are held on the surface of first electrode 21, in opening 201, on the surface of second electrode 22, and in grooves 203.

Peltier device 31 (Peltier module) includes, for example, first substrate 311 (upper substrate), second substrate 312 (lower substrate), and a plurality of (total of fourteen in the example in Fig. 3) semiconductors 313.

First substrate 311 has a rectangular plate shape, for example, and is a ceramic substrate. Second substrate 312 has a rectangular plate shape having an area larger than that of first substrate 311, for example, and is a ceramic substrate. First substrate 311 has substantially the same shape and the same area as electrode 20.

Fourteen semiconductors 313 are of seven N-type semiconductors and seven P-type semiconductors, and the N-types and the P-types are alternately electrically coupled. Conductor patterns (electrodes) are formed on the lower surface of first substrate 311 and the upper surface of second substrate 312 such that the N-type semiconductors and the P-type semiconductors are alternately coupled.

As illustrated in Fig. 2A, Peltier device 31 further includes a pair of pad electrodes 314 mounted on second substrate 312, first Peltier terminal piece 31A, and second Peltier terminal piece 31B.

First Peltier terminal piece 31A is mounted on second substrate 312, and is connected to one of the pair of pad electrodes 314. Second Peltier terminal piece 31B is mounted on second substrate 312, and is connected to the other one of the pair of pad electrodes 314.

First Peltier terminal piece 31A and second Peltier terminal piece 31B are electrically connected to a voltage source of second power source circuit 102. As an example, first Peltier terminal piece 31A is electrically connected, via corresponding pad electrode 314, to the N-type semiconductor located at the start point of 14 coupled semiconductors 313. Second Peltier terminal piece 31B is electrically connected, via corresponding pad electrode 314, to the P-type semiconductor positioned at the terminal point of 14 coupled semiconductors 313.

By applying a voltage to Peltier device 31 by a voltage source of second power source circuit 102, a direct current sequentially flows from first Peltier terminal piece 31A, fourteen semiconductors 313, and second Peltier terminal piece 31B in this order. As a result, Peltier device 31 absorbs heat (performs cooling) at the upper surface of first substrate 311 and generates heat at the lower surface of second substrate 312.

Peltier device 31 is disposed so as to face at least one of the pair of electrodes 20. As an example, first substrate 311 has substantially the same shape (rectangular plate shape) and substantially the same area as each electrodes 20 and ion exchange membrane 4, and first electrode 21, ion exchange membrane 4, second electrode 22, and first substrate 311 are disposed in this order at the uppermost. Thus, first substrate 311 is disposed to face the surface (second surface 22B) of second electrode 22. As an example, as illustrated in Fig. 4, first substrate 311 faces second surface 22B of second electrode 22, in such a manner that first substrate 311 is in contact with second surface 22B.

Peltier device 31 mainly cools second electrode 22, and may also indirectly cool ion exchange membrane 4 and first electrode 21. As a result, dew condensation water is generated at first electrode 21, ion exchange membrane 4, and second electrode 22.

Ion exchange membrane 4 is an ion exchange resin formed in a film shape. Ion exchange membrane 4 is disposed between the pair of electrodes 20.

In particular, as an example of the present exemplary embodiment, the pair of electrodes 20 are disposed in such a way that ion exchange membrane 4 is sandwiched therebetween in the thickness direction of the electrodes 20. That is, the upper surface of ion exchange membrane 4 is substantially in surface contact with first electrode 21, and the lower surface of ion exchange membrane 4 is substantially in surface contact with second electrode 22. By sandwiching ion exchange membrane 4 with the pair of electrodes 20, the electrode gap of the pair of electrodes 20 can be uniquely set. As a result, variation in electrode gap in manufacturing a plurality of gas generators 1 can be suppressed.

Ion exchange membrane 4 has substantially the same shape (rectangular shape) and substantially the same area as electrodes 20. The thickness of ion exchange membrane 4 is, for example, 0.1 µm. Ion exchange membrane 4, which is a hydrophilic membrane, absorbs and holds dew condensation water generated at the pair of electrodes 20 by cooling with Peltier device 31 of supply unit 3. Thus, supply liquid 5 containing dew condensation water allows conduction between anode A1 and cathode B1 with a certain resistance. That is, as illustrated in Fig. 6, the pair of electrodes 20 is separated in such a way that supply liquid 5 is sandwiched therebetween. Thus, for example, hydrogen gas 51 and oxygen gas 52 generated by electrolysis can be readily separated, as compared with a configuration in which the entire pair of electrodes 20 are immersed in supply liquid 5 in a container having a certain depth to contain supply liquid 5. As a result, a configuration in which gas to be used is easily selected can be provided.

By applying a current between the pair of electrodes 20, supply liquid 5 in contact with anode A1 and supply liquid 5 in contact with cathode B1 are electrolyzed. Oxygen gas 52 is generated at the surface of anode A1, and hydrogen gas 51 is generated at the surface of cathode B1, and the gases are released into a space.

As illustrated in Figs. 1 and 3, retainer 7 is configured to retain Peltier device 31 together with sink 8. Retainer 7 includes first member 71 and second member 72. Both first member 71 and second member 72 have electrical insulation. First member 71 and second member 72 are, for example, resin members.

First member 71 has a substantially rectangular plate shape and has, on the lower surface thereof, positioning step 711 (see Fig. 3) that engages with a rear end of second substrate 312 of Peltier device 31. In a state where the rear end of second substrate 312 is engaged with positioning step 711, first member 71 sandwiches and retains the rear end together with the upper surface (flat surface 800) of sink 8. First member 71 has insertion hole 710 (see Fig. 3) penetrating first member 71 in a thickness direction. Screw J1 is inserted in insertion hole 710 and screwed into a screw hole in sink 8. First member 71 is fastened together with fixing part 9 to sink 8 by screw J1.

First member 71 has, on the upper surface thereof, a plurality of ribs 712 (see Fig. 3) protruding upward so as to position first terminal piece 210 and second terminal piece 220. First region R1 in the substantially left half on the upper surface of first member 71 protrudes slightly upward further than second region R2 in the substantially right half (see Fig. 3). First terminal piece 210 is fitted between ribs 712 to be positioned on first region R1, and second terminal piece 220 is fitted between ribs 712 to be positioned and disposed on the second region R2. In this state, fixing part 9 and first member 71 are fastened together with screw J1. As a result, first terminal piece 210 and second terminal piece 220 are retained in a state where electrical insulation is kept therebetween.

In short, first member 71 has a function of positioning Peltier device 31 and a function of positioning the pair of electrodes 20.

Second member 72 has a substantially rectangular plate shape and has, on the lower surface thereof, positioning step 721 (see Fig. 3) that engages with a front end of second substrate 312 of Peltier device 31. In a state where the front end of second substrate 312 is engaged with positioning step 721, second member 72 sandwiches and retains the front end together with flat surface 800 of sink 8. Second member 72 has an insertion hole penetrating second member 72 in a thickness direction. Screw J2 is inserted in the insertion hole and screwed into a screw hole in sink 8.

In this manner, Peltier device 31 is sandwiched by retainer 7 and sink 8 in the up-down direction to be stably retained.

Fixing part 9 has a substantially rectangular plate shape. Fixing part 9 has electrical insulation. Fixing part 9 is, for example, a resin member. Fixing part 9 has insertion hole 90 (see Fig. 3) penetrating fixing part 9 in the thickness direction thereof. Screw J1 is inserted in insertion hole 90 to fasten first member 71 together with fixing part 9 to sink 8 as described above. As a result, first terminal piece 210 and second terminal piece 220 are fixed to first member 71, whereby the pair of electrodes 20 at distal ends of first terminal piece 210 and second terminal piece 220 are positioned in a stable manner.

Sink 8 (heat sink) is formed of a member having sufficient heat transfer characteristics. Sink 8 is formed by aluminum die-casting, for example. A plurality of fins 80 (see Fig. 1) is formed on the lower surface of sink 8. Second substrate 312 of Peltier device 31 is substantially in surface contact with flat surface 800 (upper surface) of sink 8, and the heat generated at second substrate 312 is efficiently released to the outside by fins 80 in the lower side. Sink 8 has screw holes into which screws J1 and J2 are screwed, and decomposition unit 2 and supply unit 3 are fixed by screwing as described above. In short, sink 8 has not only a heat dissipation function but also a function as a base on which decomposition unit 2 and supply unit 3 are mounted.

First electrode chamber H1 (see Fig. 6) is configured to house first electrode 21. First electrode chamber H1 has a hollow box shape. First electrode chamber H1 is made of, for example, a resin. First electrode chamber H1 covers first surface 21A of first electrode 21. First electrode chamber H1 has, in the lower surface thereof, an opening that exposes second surface 21B of first electrode 21 that substantially makes surface contact with the upper surface of ion exchange membrane 4. That is, first electrode chamber H1 houses first electrode 21 in such a manner that second surface 21B is exposed through the opening. First electrode chamber H1 has exhaust port H10 (see Fig. 6) for discharging a gas generated from supply liquid 5 in contact with first electrode 21. Since first electrode 21 is cathode B1, hydrogen gas 51 generated by electrolysis is discharged from exhaust port H10.

In Fig. 6, for easy understanding, supply liquid 5 is illustrated with dot hatching, and flows of hydrogen gas 51 and oxygen gas 52 are schematically illustrated with broken line arrows.

When gas generator 1 is used as a hydrogen generator, a pipe is connected to exhaust port H10 in such a way that hydrogen gas 51 is collected through exhaust port H10 as a gas to be used. When gas generator 1 is used as an oxygen generator, a pipe is connected to exhaust port H10 in such a way that hydrogen gas 51 from exhaust port H10 is discarded. Besides exhaust port H10, first electrode chamber H1 may be provided with a ventilation port through which the atmosphere enters.

Second electrode chamber H2 (see Fig. 6) is configured to house second electrode 22. Second electrode chamber H2 has a hollow box shape. Second electrode chamber H2 is made of, for example, a resin. Second electrode chamber H2 covers second surface 22B of second electrode 22. Second electrode chamber H2 has, in the upper surface thereof, an opening that exposes first surface 22A of second electrode 22 that substantially makes surface contact with the lower surface of ion exchange membrane 4. That is, second electrode chamber H2 houses second electrode 22 in such a manner that first surface 22A is exposed through the opening. Second electrode chamber H2 has exhaust port H20 (see Fig. 6) for discharging a gas generated from supply liquid 5 in contact with second electrode 22. Since second electrode 22 is anode A1, oxygen gas 52 generated by electrolysis is discharged from exhaust port H20.

When gas generator 1 is used as an oxygen generator, a pipe is connected to exhaust port H20 in such a way that oxygen gas 52 is collected through exhaust port H20 as a gas to be used. When gas generator 1 is used as a hydrogen generator, a pipe is connected to exhaust port H20 in such a way that oxygen gas 52 from exhaust port H20 is discarded. Besides exhaust port H20, second electrode chamber H2 may be provided with a ventilation port through which the atmosphere enters.

Here, it is assumed that Peltier device 31 is also housed in second electrode chamber H2. For example, second electrode chamber H2 has an opening in the lower surface thereof, and Peltier device 31, mainly first substrate 311 thereof, is inserted through the opening and housed in second electrode chamber H2. Alternatively, Peltier device 31 may be disposed outside second electrode chamber H2 and face second surface 22B of second electrode 22 via second electrode chamber H2. In this case, a portion of second electrode chamber H2 that exists between Peltier device 31 and second electrode 22 is preferably formed of a material having sufficient heat conductivity.

First power source circuit 101 includes current source 103 that applies a direct current (constant current) of a constant magnitude to load L1 (decomposition unit 2). Current source 103 is electrically connected between first terminal piece 210 and second terminal piece 220. In addition, for example, first power source circuit 101 may include a conversion circuit that converts input AC power from a utility AC power source as input power into DC power of a predetermined magnitude (alternatively, input power may be DC power from a secondary battery). Current source 103 generates a constant current from DC power resulting from conversion by the conversion circuit. Current source 103 detects a current value of a current flowing through load L1, compares the current value to a reference current value with a comparator or the like, and controls the current flowing through load L1 so as to keep the current flowing constant.

Second power source circuit 102 is configured to apply a predetermined DC voltage between two ends of Peltier device 31. Second power source circuit 102 generates a predetermined DC voltage from, for example, DC power resulting from conversion by the conversion circuit described above, and applies the generated DC voltage across first Peltier terminal piece 31A and second Peltier terminal piece 31B.

Control circuit 104 is configured to control first power source circuit 101 and second power source circuit 102. Control circuit 104 can be implemented by, for example, a computer system including one or more processors (microprocessors) and one or more memories. That is, one or more processors execute one or more programs (applications) stored in one or more memories to perform a function of control circuit 104. The program is stored in advance in the memory of control circuit 104, but may be provided through a telecommunication line such as the Internet or in a form stored in a non-transitory recording medium such as a memory card.

The control mode of control circuit 104 varies depending on an exemplary application of gas generator 1. For example, when gas supply system 100 includes a power switch that receives on or off operation performed by a user who uses gas generator 1, control circuit 104 starts or stops applying a constant current to first power source circuit 101 in accordance with an on operation or an off operation performed by the user. That is, supply of hydrogen gas 51 and oxygen gas 52 is started or stopped at any timing that the user desires. Alternatively, when periodic gas supply from gas supply system 100 is required, control circuit 104 periodically starts or stops applying a constant current to first power source circuit 101.

Starting or stopping of a cooling operation of Peltier device 31 may be performed substantially simultaneously in conjunction with starting or stopping of supplying hydrogen gas 51 and oxygen gas 52, but is not necessarily performed simultaneously. For example, it may be configured that when it is determined that the amount of supply liquid 5 is insufficient from a result of detecting the current value of the current flowing through load L1, control circuit 104 causes second power source circuit 102 to start applying a predetermined DC voltage to perform a cooling operation of Peltier device 31. When gas supply system 100 includes a sensor that detects a flow rate of the generated gas, control circuit 104 may start and stop the cooling operation of Peltier device 31 on the basis of the result of detection. Control circuit 104 may periodically start or stop the cooling operation of Peltier device 31 at a predetermined interval. Alternatively, control circuit 104 may continue executing the cooling operation of Peltier device 31 almost throughout while gas supply system 100 is operating.

### (2.2) Operation

Hereinafter, an operation of gas generator 1 will be briefly described with reference to Fig. 6.

When the cooling operation of Peltier device 31 is performed by control circuit 104, vapor contained in the surrounding atmosphere is condensed on surfaces of the pair of electrodes 20 and ion exchange membrane 4. As a result, supply liquid 5 is automatically provided to decomposition unit 2. Supply liquid 5 is held mainly by ion exchange membrane 4. A portion of supply liquid 5 is held by electrode 20 in such a manner that the portion of supply liquid 5 enters openings 201 and grooves 203.

When control circuit 104 performs an operation of applying a current to load L1, a portion of supply liquid 5 is electrolyzed.

Hydrogen gas 51 is generated from supply liquid 5 in contact with cathode B1 (first electrode 21). In particular, hydrogen gas 51 generated from supply liquid 5 that has entered the plurality of openings 201 of first electrode 21 flows from openings 201 in first electrode chamber H1, and is exhausted from exhaust port H10.

Oxygen gas 52 is generated from supply liquid 5 in contact with anode A1 (second electrode 22). In particular, oxygen gas 52 generated from supply liquid 5 that has entered the plurality of grooves 203 of second electrode 22 flows along grooves 203 in second electrode chamber H2 and is exhausted from exhaust port H20.

### [Advantages]

As described above, according to gas generator 1 of the present exemplary embodiment, supply unit 3 collects moisture in the atmosphere and supplies the collected moisture to decomposition unit 2 as supply liquid 5, so that automation of periodically supplying supply liquid 5 can be readily implemented. This makes it easier, for example, to omit work of periodically adding (supplying) water or replacing a water-containing container (module). In this way, restriction on a use environment and an installation environment of gas generator 1 is reduced. For example, in an environment where the atmosphere is available, gas generator 1 can be installed even in a place with scarce means for water supply (such as a water supply facility) or a place where adding water or replacing a water containing module is difficult. As a result, gas generator 1 becomes more convenient.

In the present exemplary embodiment, supply unit 3 includes Peltier device 31 and condenses and collects moisture in the atmosphere by cooling by Peltier device 31, so that automation of periodically supplying supply liquid 5 can be readily implemented with a simple configuration.

Furthermore, in the present exemplary embodiment, Peltier device 31 is disposed so as to face electrode 20 (second electrode 22), so that electrode 20 is cooled and dew condensation water is readily and directly generated on the surface of electrode 20. Thus, for example, electrolysis of supply liquid 5 can be performed more quickly, as compared with a configuration in which dew condensation water obtained by cooling with Peltier device 31 at a different place remote from electrode 20 is sent to electrode 20 as supply liquid 5.

In particular, in the present exemplary embodiment, gas generator 1 includes ion exchange membrane 4, and ion exchange membrane 4 can compensate reduction in the efficiency of electrolysis due to supply liquid 5 obtained by collecting moisture in the atmosphere being likely to be pure water which has low conductivity.

### (3) Exemplary modifications

The exemplary embodiment described above is merely one of various exemplary embodiments of the present disclosure. The exemplary embodiment described above can be variously changed in accordance with design and the like, as long as the object of the present disclosure is achieved. Exemplary modifications of the exemplary embodiment described above will be described. Hereinafter, gas generator 1 according to the exemplary embodiment described above is referred to as gas generator 1 of "basic example". Each exemplary modification described below can be used in an appropriate combination with the basic example or a different exemplary modification.

### (3.1) First exemplary modification

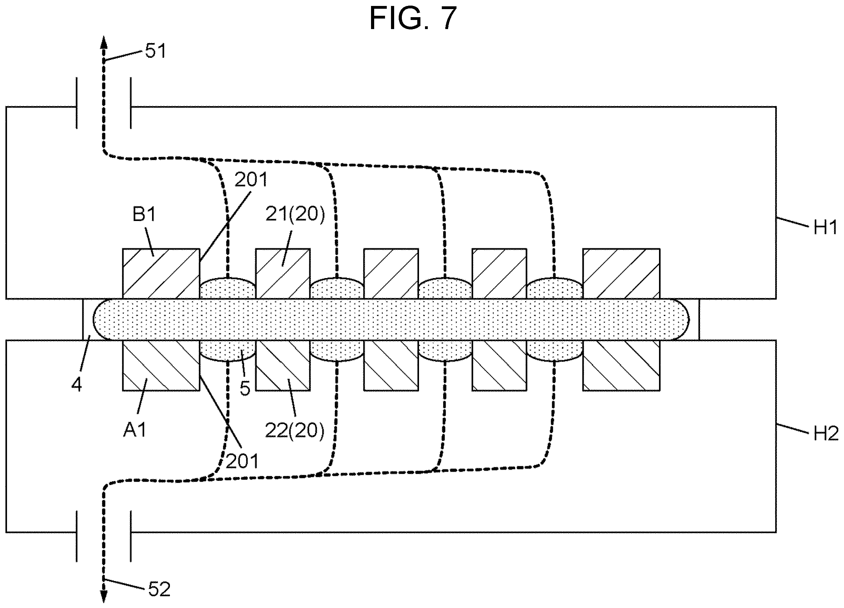

Gas generator 1 of a first exemplary modification will be described with reference to Fig. 7. Fig. 7 is a schematic conceptual diagram of the first exemplary modification of gas generator 1, and is a partial cross-sectional view. Components substantially common to gas generator 1 of the basic example are denoted by the same reference numerals, and description thereof may be omitted as appropriate.

In gas generator 1 of the basic example, first electrode 21 has openings 201 penetrating first electrode 21 in the thickness direction while second electrode 22 has non-penetrating grooves 203.

In gas generator 1 of the present exemplary modification, as illustrated in Fig. 7, second electrode 22 also has openings 201 penetrating second electrode 22 in a thickness direction.

The present exemplary modification also adopts a configuration in which a pair of electrodes 20 are separated from each other in such a way that supply liquid 5 is sandwiched therebetween, and hydrogen gas 51 and oxygen gas 52 are readily separately discharged through openings 201 to the upper side and the lower side. As a result, gas generator 1 becomes more convenient.

In another example of the first exemplary modification, both first electrode 21 and second electrode 22 may have grooves 203. Alternatively, contrary to the basic example, first electrode 21 may have grooves 203, and second electrode 22 may have openings 201.

### (3.2) Second exemplary modification

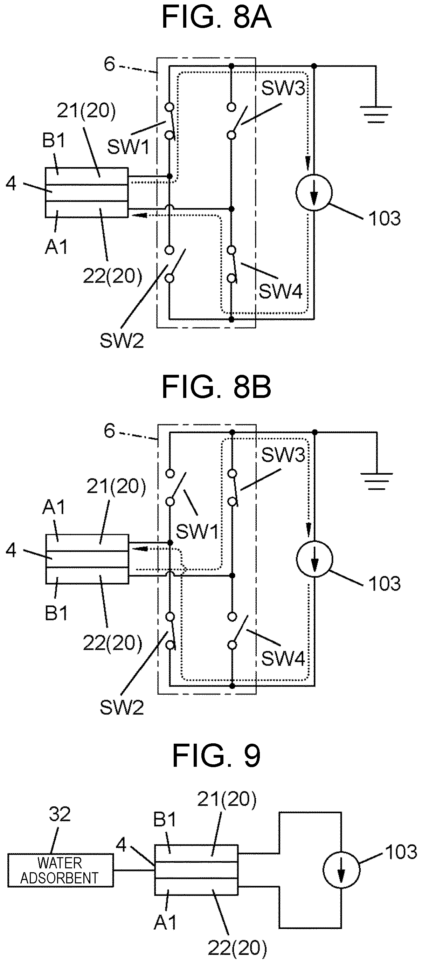

Gas generator 1 of a second exemplary modification will be described with reference to Figs. 8A and 8B. Figs. 8A and 8B are schematic circuit diagrams of the second exemplary modification of gas generator 1. Components substantially common to gas generator 1 of the basic example are denoted by the same reference numerals, and description thereof may be omitted as appropriate.

In gas generator 1 of the basic example, first electrode 21 is cathode B1, and second electrode 22 is anode A1. However, first electrode 21 may be anode A1 and second electrode 22 may be cathode B1, or anode A1 and cathode B1 may be interchangeable.

As illustrated in Figs. 8A and 8B, gas generator 1 of the present exemplary modification further includes switching unit 6 that switches the direction of a current applied to a pair of electrodes 20 to interchange anode A1 and cathode B1.

In this example, switching unit 6 includes four switches SW1 to SW4 that perform switching between conduction (ON) and non-conduction (OFF) of an electric path. Switches SW1 to SW4 are assumed to be, for example, semiconductor devices such as MOSFETs, but may be mechanical switches that open and close a contact.

Switches SW1 to SW4 are electrically connected to control circuit 104 (see Fig. 5), and are turned on and off by control circuit 104. In this case, it is preferable that control circuit 104 and current source 103 are also housed together with switching unit 6 in the same housing as that of gas generator 1.

In the illustrated example, a series circuit including switch SW1 and switch SW2 and a series circuit including switch SW3 and switch SW4 are connected in parallel to current source 103. First electrode 21 is electrically connected to a connection point between switch SW1 and switch SW2, and second electrode 22 is electrically connected to a connection point between switch SW3 and switch SW4.

In Fig. 8A, when it is controlled to set switch SW1 and switch SW4 to on and switch SW2 and switch SW3 to off, first electrode 21 becomes cathode B1 and second electrode 22 becomes anode A1, similarly to the case of the basic example. In Fig. 8B, when it is controlled to set switch SW1 and switch SW4 to off and switch SW2 and switch SW3 to on, first electrode 21 becomes anode A1 and second electrode 22 becomes cathode B1, which are opposite to the basic example. In Figs. 8A and 8B, current flows are indicated by broken line arrows for easy understanding.

Since switching unit 6 is provided, a configuration in which a gas to be used is easily changed between hydrogen gas 51 and oxygen gas 52 generated by electrolysis can be provided.

### (3.3) Third exemplary modification

Gas generator 1 of a third exemplary modification will be described with reference to Fig. 9. Fig. 9 is a schematic conceptual diagram of the third exemplary modification of gas generator 1. Components substantially common to gas generator 1 of the basic example are denoted by the same reference numerals, and description thereof may be omitted as appropriate.

In the basic example, supply unit 3 includes Peltier device 31. In gas generator 1 of the present exemplary modification, supply unit 3 includes water adsorbent 32 (see Fig. 9) instead of Peltier device 31. In this case, supply unit 3 adsorbs and collects moisture in the atmosphere with water adsorbent 32. Water adsorbent 32 is assumed to be, for example, a water adsorbent material such as silica gel or zeolite. The water adsorbent material has water-holding property. A water adsorbent material left in a space can hold a certain amount of water. Water adsorbent 32 is placed in, for example, a container having air permeability. Gas generator 1 is configured such that a gas containing a large amount of moisture adsorbed by water adsorbent 32 and accumulated in the container (high humidity gas) is sent toward ion exchange membrane 4 through a pipe such as a tube. Since supply unit 3 includes water adsorbent 32 as described above, automation of periodically supplying supply liquid 5 can be readily implemented with a simple configuration.

In another example of the third exemplary modification, supply unit 3 may include both Peltier device 31 and water adsorbent 32. For example, a gas containing a large amount of moisture adsorbed by water adsorbent 32 and accumulated in a container may be cooled with Peltier device 31 to be condensed at electrode 20 and ion exchange membrane 4 more efficiently.

### (3.4) Other exemplary modification

Gas generator 1 may include a fan or the like for efficiently sending the atmosphere to electrode 20, ion exchange membrane 4, Peltier device 31, water adsorbent 32 of the third exemplary modification, or the like.

In the basic example, Peltier device 31 is disposed to face second electrode 22. However, Peltier device 31 may be disposed to face first electrode 21. Beside Peltier device 31 of the basic example, gas generator 1 may include another Peltier device 31 disposed to face first electrode 21.

Gas generator 1 of the basic example is configured such that Peltier device 31 is disposed adjacent to electrode 20 (second electrode 22) to directly cool electrode 20. However, Peltier device 31 may be disposed at a place remote from electrode 20. In this case, gas generator 1 may include a water storage tank that stores dew condensation water obtained by cooling with Peltier device 31, and a feeding mechanism such as a pump that feeds the water in the water storage tank to electrode 20.

### (Aspects)

As described above, gas generator (1) according to a first aspect includes decomposition unit (2) and supply unit (3). Decomposition unit (2) reacts with at least a portion of supply liquid (5) to generate at least one of hydrogen gas (51) or oxygen gas (52). Supply unit (3) collects moisture in the atmosphere, and supplies the collected moisture to decomposition unit (2) as supply liquid (5).

According to this aspect, automation of periodically supplying supply liquid (5) can be readily implemented. This makes it easier, for example, to omit work of periodically adding (supplying) water or replacing a water-containing container. In this way restriction on a use environment and an installation environment of gas generator (1) is reduced. As a result, gas generator (1) becomes more convenient.

With regard to gas generator (1) according to a second aspect, in the first aspect, supply unit (3) includes Peltier device (31), and the moisture in the atmosphere is condensed and collected by cooling with Peltier device (31).

According to this aspect, automation of periodically supplying supply liquid (5) can be readily implemented with a simple configuration.

According to this aspect, dew condensation water is readily and directly collected on the surface of electrode (20), so that the electrolysis of supply liquid (5) can be performed more quickly.

With regard to gas generator (1) according to a third aspect, in any one of the first and second aspects, supply unit (3) includes water adsorbent (32), and the moisture in the atmosphere is adsorbed and collected by water adsorbent (32).

According to this aspect, automation of periodically supplying supply liquid (5) can be readily implemented with a simple configuration.

With regard to gas generator (1) according to a fourth aspect, in any one of the first to third aspects, decomposition unit (2) includes a pair of electrodes (20) to be anode (A1) and cathode (B1), and the at least the portion of supply liquid (5) is electrolyzed to generate hydrogen gas (51) and oxygen gas (52).

According to this aspect, both hydrogen gas (51) and oxygen gas (52) can be generated with a simple configuration.

In a combination of the fourth aspect and the second aspect, Peltier device (31) may be disposed so as to face at least one of the pair of electrodes (20). In this case, dew condensation water is readily and directly collected on the surface of electrode (20), so that the electrolysis of supply liquid (5) can be performed more quickly.

Gas generator (1) according to a fifth aspect further includes ion exchange membrane (4) disposed between the pair of electrodes (20) in the fourth aspect.

According to this aspect, it is likely that supply liquid (5) obtained by collecting moisture in the atmosphere is pure water having low conductivity; however, since ion exchange membrane (4) is provided, the conductivity of supply liquid (5) can be enhanced.

With regard to gas generator (1) according to a sixth aspect, in the fifth aspect, the pair of electrodes (20) each have a plate shape with a thickness and are disposed in such a manner that ion exchange membrane (4) is sandwiched therebetween in a thickness direction of the pair of electrodes (20).

According to this aspect, an electrode gap of the pair of electrodes (20) can be uniquely set to suppress variation in manufacturing.

With regard to gas generator (1) according to a seventh aspect, in any one of the fourth to sixth aspects, the pair of electrodes (20) are separated from each other in such a manner that supply liquid (5) is sandwiched between the pair of electrodes (20).

According to this aspect, hydrogen gas (51) and oxygen gas (52) generated by electrolysis are readily separated, and a configuration in which a gas to be used is easily selected can be provided.

With regard to gas generator (1) according to an eighth aspect, in any one of the fourth to seventh aspects, at least one of the pair of electrodes (20) is an electrode having a plate shape with a thickness and having one or a plurality of openings (201) penetrating the at least one of the pair of electrode (20) in a thickness direction.

According to this aspect, gas (hydrogen gas 51 or oxygen gas 52) generated around electrode (20) by electrolysis is readily discharged through opening (201), and as a result, hydrogen gas (51) and oxygen gas (52) are readily separated from each other.

Gas generator (1) according to a ninth aspect further includes a switching unit (6) that switches the direction of a current applied to the pair of electrodes (20) to interchange anode (A1) and cathode (B1) in any one of the fourth to eighth aspects.

According to this aspect, a configuration in which a gas to be used is easily changed between hydrogen gas (51) and oxygen gas (52) generated by electrolysis can be provided.

In the configurations according to the second to ninth aspects, omission can be made as appropriate.

### REFERENCE MARKS IN THE DRAWINGS

- 1: gas generator
- 2: decomposition unit
- 20: electrode
- 201: opening
- 3: supply unit
- 31: Peltier device
- 32: water adsorbent
- 4: ion exchange membrane
- 5: supply liquid
- 51: hydrogen gas
- 52: oxygen gas
- 6: switching unit
- A1: anode
- B1: cathode

## Claims

1. A gas generator comprising:
a decomposition unit that reacts with at least a portion of a supply liquid to generate at least one of hydrogen gas or oxygen gas; and
a supply unit that collects moisture in atmosphere and supplies the collected moisture to the decomposition unit as the supply liquid.

2. The gas generator according to Claim 1, wherein
the supply unit comprises a Peltier device, and condenses and collects the moisture in the atmosphere by cooling with the Peltier device.

3. The gas generator according to Claim 1, wherein
the supply unit comprises a water adsorbent, and adsorbs and collects the moisture in the atmosphere with the water adsorbent.

4. The gas generator according to any one of Claims 1 to 3, wherein
the decomposition unit comprises a pair of electrodes to be an anode and a cathode, and generates the hydrogen gas and the oxygen gas by electrolyzing the at least the portion of the supply liquid.

5. The gas generator according to Claim 4, further comprising:
an ion exchange membrane disposed between the pair of electrodes.

6. The gas generator according to Claim 5, wherein
the pair of electrodes each have a plate shape with a thickness, and are disposed in such a manner that the ion exchange membrane is sandwiched between the pair of electrodes in a thickness direction of the pair of electrodes.

7. The gas generator according to any one of Claims 4 to 6, wherein
the pair of electrodes are separated from each other in such a manner that the supply liquid is sandwiched between the pair of electrodes.

8. The gas generator according to any one of Claims 4 to 7, wherein
at least one of the pair of electrodes is an electrode having a plate shape with a thickness and having one or a plurality of openings penetrating the at least one of the pair of electrodes in a thickness direction.

9. The gas generator according to any one of Claims 4 to 8, further comprising:
a switching unit that switches a direction of a current applied to the pair of electrodes to interchange the anode and the cathode.
